# FASCICULE DE BREVET EUROPEEN

(11) **EP 2 186 398 B1**
(45) Date de publication et mention de la délivrance du brevet: **11.12.2013**
(21) Numéro de dépôt: 09075476.3
(22) Date de dépôt: 26.10.2009
(51) Int. Cl.: A01K 1/04

(54) **Dispositif avec adapteur à fixation rapide pour relier la laisse d'un animal domestique à un élément récepteur associé à un support fixe**
Vorrichtung mit Schnellbefestigungsadapter zum Festmachen der Leine eines Haustiers an einem Aufnahmeelement, das mit einer festen Halterung verbunden ist
Device with quick-fixing adapter for connecting the leash of a domestic animal to a receiving element associated with a fixed support

(30) Priorité: 05.11.2008 FR 0806158
(43) Date de publication de la demande: 19.05.2010
(73) Titulaire: Behe, Jean-Marc, 68740 Blodelsheim (FR)
(72) Inventeur: Behe, Jean-Marc, 68740 Blodelsheim (FR)
(74) Mandataire: Burkard, Thierry

(56) Documents cités:
- DE-U1- 29 617 172
- US-A- 5 704 526
- US-A1- 2003 066 493
- US-A1- 2007 215 064
- US-B1- 6 318 302
- US-B1- 6 820 573

## Description

La présente invention concerne un dispositif permettant de relier la laisse d'un animal domestique, et plus particulièrement une laisse à enrouleur, à un support fixe, telle qu'une paroi ou le sol. Le dispositif est conçu pour permettre de relier la laisse de tout animal domestique, notamment un chien, mais pas exclusivement, et y compris les animaux de plus petites tailles tels que par exemple des lapins, des chats ou d'autres espèces dites «nouveaux animaux de compagnie ».

Il existe de nombreuses situations dans lesquelles le propriétaire d'un animal domestique peut être conduit à momentanément attacher celui-ci pour l'empêcher de vagabonder. Tel est le cas par exemple à l'entrée de nombreux commerces, notamment alimentaires où il n'est pas permis de pénétrer avec un animal. Par ailleurs, il peut être souhaité dans un cadre purement privé de pouvoir contrôler les déplacements d'un animal, sans pour autant lui interdire tout mouvement, afin d'éviter qu'il ne divague ou qu'il ne quitte l'enceinte dans laquelle il doit rester. Il s'agit là à la fois de concilier le bien-être de l'animal domestique en lui évitant d'être enfermé dans un local clos ou d'être attaché trop serré à un point fixe, sans possibilité de mouvement ou de déplacement, et d'autre part les impératifs de sécurité et de respect de la réglementation, qui dans beaucoup d'endroits interdisent le vagabondage des animaux. Egalement, il peut être souhaitable de contrôler les instincts plus ou moins fugueurs de certains animaux domestiques, dont la présence sans surveillance et sans moyen de contrôle sur le domaine public peut être source de dangers ou d'accidents, et ceci même si l'animal n'a pas forcément un comportement agressif.

Pour ces diverses raisons, l'art antérieur s'est attaché à rechercher et à développer différents dispositifs de nature à répondre à cette attente.

Plus particulièrement, on connaît divers dispositifs qui sont conçus pour permettre de relier de manière temporaire la laisse d'un animal domestique à un support soit vertical soit horizontal.

Ainsi, on connaît du document US 4 546 730 un dispositif qui est constitué d'un tambour autour duquel on enroule la laisse, et comportant en son centre un tube ouvert dont le diamètre est défini pour permettre le passage d'un poteau ou d'un piquet, comme par exemple le pied d'un parasol. Ce dispositif permet donc d'attacher indirectement l'animal par l'intermédiaire de sa laisse et du tambour à un piquet vertical. Il est cependant disgracieux, encombrant et complexe à mettre en oeuvre et ne permet pas un accrochage rapide ni l'utilisation de dispositifs à enrouleur. Cet inconvénient est important car de plus en plus les propriétaires d'animaux domestiques utilisent des laisses à enrouleur qui leur permettent de faire varier la distance de la laisse, et donc le rayon d'action laissé à l'animal, en fonction des circonstances, du lieu ou de la traction exercée par l'animal.

On connaît également du document FR 252 5069 un dispositif qui est constitué d'une barre horizontale qui est accrochée sur une paroi verticale, comme par exemple un mur, à l'image d'une tringle de rideau. La barre est engagée dans des anneaux qui sont fixés à demeure sur le support vertical. L'utilisation du dispositif suppose que l'on introduise d'abord la barre dans l'un des anneaux puis que l'on fasse coulisser une poignée de laisse sur la barre avant de mettre en place l'autre extrémité de la barre horizontale dans le deuxième anneau mural. Ce dispositif est satisfaisant dans la mesure où il permet d'accrocher l'animal et de limiter ses déplacements tout en lui laissant une certaine liberté de mouvement, puisqu'il peut déplacer l'extrémité de sa laisse entre les deux anneaux muraux le long de la barre horizontale. Cependant, le dispositif ne permet pas une fixation et un décrochage rapide de la laisse car il faut à chaque fois manoeuvrer la barre, la retirer ou la remettre en place.

L'art antérieur le plus proche est illustré dans le document US 6,820,573 qui décrit un dispositif pour relier la laisse d'un animal domestique à un support fixe, composé d'un adaptateur constitué d'un manchon comportant à une de ses extrémités une tige saillante et à son autre extrémité des moyens de liaison et de fixation au support destiné à recevoir le dispositif et d'un récepteur pour la poignée d'une laisse à enrouleur, conformément au préambule de la revendication 1.

Les dispositifs de l'art antérieur sont satisfaisants en termes d'efficacité puisqu'ils permettent de laisser une certaine liberté de mouvement à l'animal sans pour autant qu'il soit hors de contrôle. Ils restent néanmoins difficiles et contraignants à utiliser et ne permettent pas notamment une utilisation en fonction des besoins et dans des lieux différentiés, puisqu'ils doivent rester implantés à demeure.

La présente invention se propose de remédier aux différents inconvénients des dispositifs de l'art antérieur en proposant un dispositif doté d'un adaptateur permettant grâce à un récepteur spécifique de relier la laisse ou la poignée d'un enrouleur de laisse d'un animal domestique à un support fixe, horizontal ou vertical, d'une manière à la fois simple et rapide, sans manipulation ou réglage long ou délicat et sans nécessiter d'implanter à demeure des éléments lourds.

Dans ce but, le dispositif selon l'invention est **caractérisé en ce qu**'il comporte un récepteur pour laisse à enrouleur avec des moyens de fixation et de décrochage rapides, prévu pour être associé à un adaptateur pour être relié à un support de fixation.

L'invention sera mieux comprise au travers de la description donnée ci-après de plusieurs exemples de réalisation non limitatifs, et par rapport aux figures annexées dans lesquelles :
- la figure 1 montre un dispositif selon l'invention, avec un enrouleur de laisse en place dans le récepteur, lui-même relié à l'adaptateur,
- la figure 2 est une vue en éclaté représentant les différentes pièces composant l'adaptateur et le récepteur constituant le dispositif selon l'invention,
- la figure 3 représente un premier mode de mise en oeuvre de l'invention,
- la figure 4 représente un deuxième mode de mise en oeuvre de l'invention,
- la figure 5 représente un troisième mode de mise en oeuvre de l'invention,
- la figure 6 représente un quatrième mode de mise en oeuvre de l'invention et
- la figure 7 illustre une extrapolation possible de l'invention.

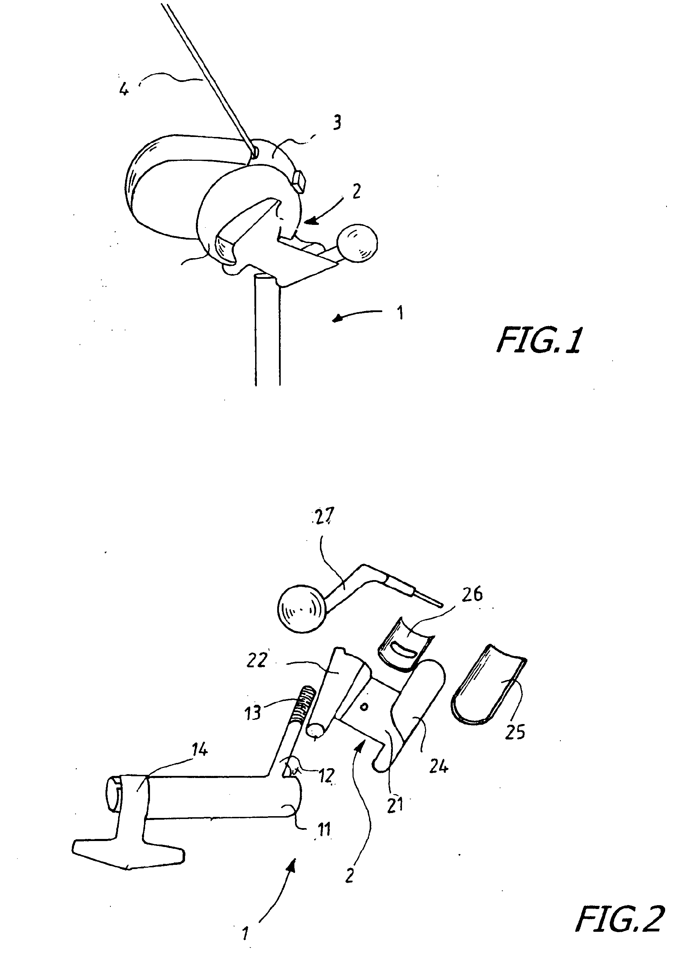

En référence aux figures annexées, et notamment la figure 1, le dispositif selon l'invention est composé, d'une part d'un adaptateur (1), et d'autre part d'un récepteur (2).

L'adaptateur (1) est destiné à relier le récepteur (2) avec la laisse (4) à un support horizontal ou vertical.

Plus particulièrement, comme montré à la figure 2, l'adaptateur (1) est constitué d'un manchon (11) comportant à une de ses extrémités une tige saillante (12) dont l'axe forme un angle α avec l'axe longitudinal du manchon (11), et dont la partie libre présente un filetage (13) prévu pour recevoir une vis de blocage ou tout autre moyen équivalent. L'autre extrémité du manchon (11) comporte des moyens de liaison et de fixation (14) au support destiné à recevoir le dispositif. Dans l'exemple représenté, l'angle α est d'environ 45° et les moyens (14) sont constitués d'une vis papillon comprimant l'extrémité du manchon (11) qui a ici la forme d'un tube creux. Cette forme n'est pas exclusive, et le manchon peut prendre d'autre forme tout comme les moyens (14), comme il sera illustré dans la suite de la description. De même, l'angle α peut varier entre 0° et 90°.

Le récepteur (2) est prévu pour recevoir la poignée (3) d'une laisse à enrouleur (4) et comporte des moyens de fixation rapide permettant de mettre en place et de dégager cette poignée, ainsi que des moyens de liaison à l'adaptateur (1).

Plus particulièrement, le récepteur (2) comporte une plaque (21) dont l'une des extrémités se prolonge par un tube ouvert (22) dont le diamètre interne est légèrement supérieur à celui de la tige (12) qui peut donc y être insérée. Les dimensions respectives de la tige (12) et du tube (22) sont définies de telle sorte que lorsque le tube (22) est engagé sur la tige (12), l'extrémité filetée (13) dépasse du bord supérieur du tube (22).

Ceci permet de visser sur cette extrémité un élément de blocage approprié (non représenté).

L'autre extrémité de la plaque (21) est repliée pour former une gorge en forme de U pour définir un logement (24), prévu pour recevoir la poignée d'un enrouleur de laisse.

Le récepteur (2) est complété par une pièce de protection (25), une pièce de maintien (26) et une pièce de fixation et de commande (27). La pièce de protection (25) est interposée entre la paroi de fond du logement (24) et la poignée de l'enrouleur de laisse. La pièce de maintien (26) vient se positionner sur le dessus de la poignée (3) une fois celle-ci engagée dans le logement (24), l'ensemble étant bloqué en position grâce à une pièce de fixation (27) traversante comportant par ailleurs des moyens de commande, par exemple une poignée ou une tige à boule.

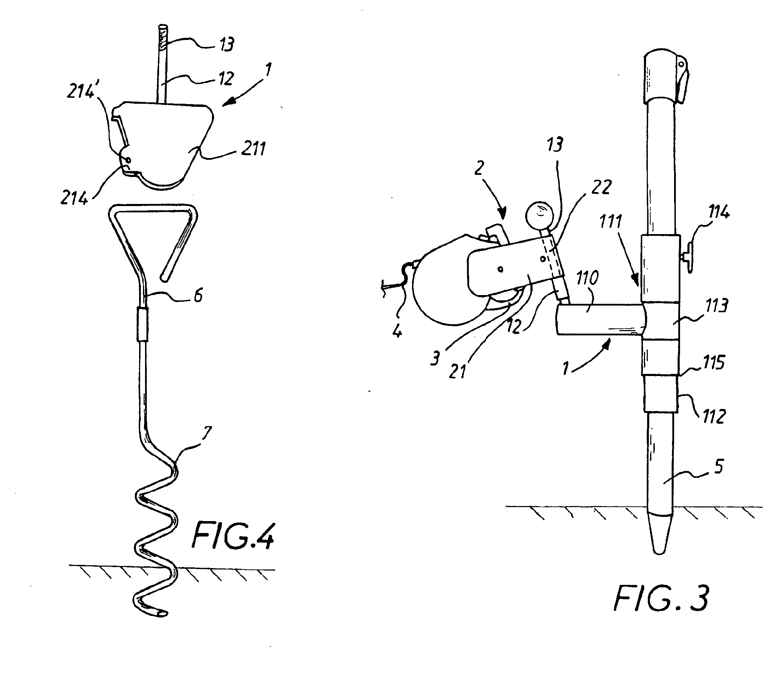

La figure 3 montre une première variante de réalisation de l'invention.

Selon cette variante, le dispositif est destiné à permettre de relier une laisse à un support qui sera planté dans le sol, mais sans être ancré à demeure. Il peut s'agit par exemple du pied d'un parasol ou de tout autre élément vertical tubulaire en forme de piquet, qui n'est pas destiné à être maintenu à demeure dans le sol mais qui pourra être planté dans un endroit ou un autre en fonction des besoins ou souhaits de l'utilisateur.

Le manchon (11) de l'adaptateur (1) est ici formé d'un tube vertical creux (111) dont le diamètre intérieur correspond à celui du pied (5) du parasol.

Selon cette première variante, le manchon (111) est composé de deux tubes (112 et 113). Un premier tube interne (112) comporte dans sa partie centrale un rétrécissement circonférentiel (115). Ce rétrécissement forme une gorge sur le pourtour du tube interne pour recevoir le tube externe (113) qui y est inséré avant d'être soudé de manière à pouvoir être libre en rotation autour du tube interne sans pouvoir pour autant s'en dégager. Dans la partie supérieure du tube interne (112), on trouve des moyens de fixation au support (114), comme par exemple, une vis à papillon qui va traverser perpendiculairement l'extrémité supérieure du tube interne du manchon pour venir serrer contre le pied du parasol une fois celui introduit dans le manchon (111) et le bloquer en position. Lorsque l'adaptateur (1) est en position autour du pied (5) du parasol, le tube externe (113) du manchon (111) peut librement tourner à 360° autour du tube interne (112), donc faire une rotation complète, mais sans pour autant s'en dégager puisqu'il est prisonnier dans la gorge (115).

Pour faciliter la mise en place du récepteur (2) sur la tige filetée (12) de l'adaptateur (1), on peut, mais pas nécessairement, prévoir une section de tube (110) soudée perpendiculairement au manchon (111) pour introduire un déport entre l'axe du manchon (111) et celui de la tige filetée (12). La tige (12) est alors disposée à l'extrémité libre de la section de tube soudée (110).

Le déplacement de la laisse et donc de l'animal qui est au bout de cette laisse est possible dans les trois dimensions puisqu'on a non seulement une rotation de l'adaptateur (1) à 360° autour de l'axe principal qui est représenté par le pied du parasol mais on a également une rotation du récepteur '(2) de la laisse à enrouleur autour de la tige (12) à extrémité filetée puisque le filetage (13) qui n'est présent qu'en extrémité de la tige sert à éviter le dégagement vers le haut du support d'enrouleur mais ne s'oppose pas à sa rotation selon l'axe de la tige. Il n'y a donc aucun risque d'entortillement ou de blocage de la laisse..

La figure 4 illustre une deuxième variante de réalisation de l'invention, permettant également d'utiliser le dispositif de l'invention sur un support horizontal meuble.

Le manchon (11) de l'adaptateur (1) prend ici la forme d'une pièce triangulaire (211) creuse ouverte à la base et prolongée au sommet par la tige saillante (12) d'extrémité filetée. L'angle α entre l'axe du manchon et celui de la tige est ici nul.

Le manchon (211) est prévu pour engager une tige (6) comportant une extrémité repliée pour former un triangle de dimension correspondante au logement constitué par le manchon (211).

L'extrémité libre de la tige (6) se termine par une zone torsadée de type tire-bouchon (7) pour permettre l'enfoncement de la tige (6) dans un matériau suffisamment mou ou souple comme par exemple de la terre.

Comme précédemment, le manchon comporte dans sa partie d'extrémité opposée à celle recevant la tige filetée (12) des moyens de liaison et de fixation (214) au support. Ces moyens sont constitués ici de deux extensions opposées, formées dans la partie inférieure ouverte du manchon (211), comportant chacune un orifice (214') pour autoriser le passage d'un dispositif de verrouillage comme par exemple une goupille ou une clavette (non représentées) pour permettre une ouverture ou une fermeture de type rapide.

Lorsque la goupille ou la clavette est en place et qu'on a assuré le verrouillage, l'extrémité en triangle de la tige de fixation (6) est emprisonnée à l'intérieur du manchon (211) triangulaire et ne peut plus s'en dégager.

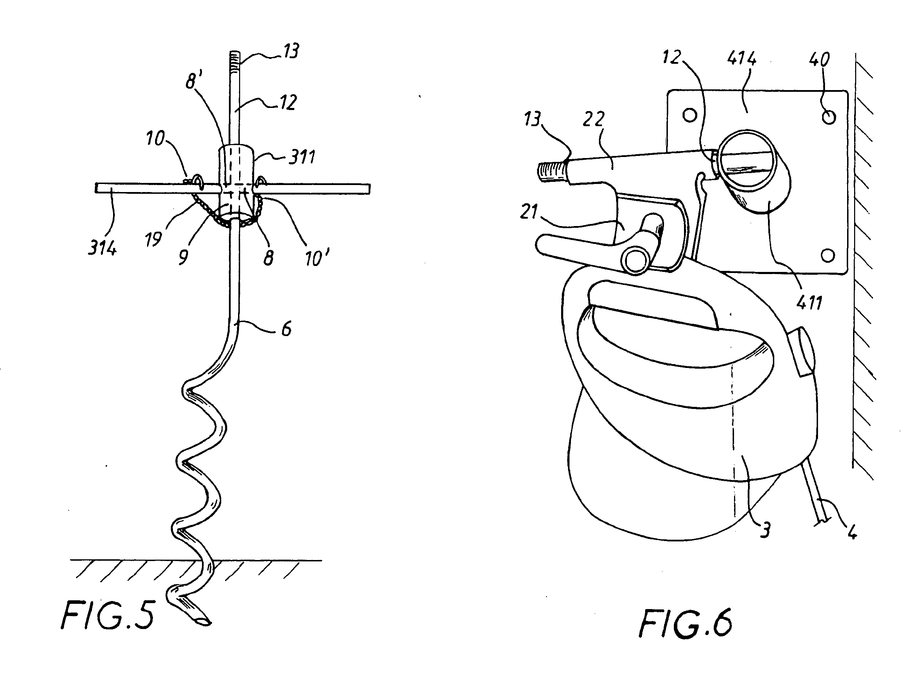

La figure 5 illustre une troisième variante de réalisation qui tout comme la précédente a pour objet de permettre une liaison avec un support horizontal, notamment le sol.

Le manchon de l'adaptateur prend ici la forme d'un tube creux (311) avec un orifice transversal (8) foré perpendiculairement. Dans sa partie supérieure, le manchon (311) est prolongé comme précédemment par la tige filetée (12), pour permettre la mise en place du récepteur (2). Comme dans la variante précédente, l'angle α entre l'axe du manchon et celui de la tige est nul.

Une tige (6) dont l'une des extrémités présente la forme en tire-bouchon (7) comme précédemment pour enfoncement par mouvement de vissage dans le sol comporte à son autre extrémité un tube plein (9) de diamètre légèrement inférieur à celui du manchon (311), et présentant lui aussi un orifice transversal perpendiculaire (8') de diamètre correspondant à celui de l'orifice (8) du manchon (311).

Lorsqu'on engage le tube plein (9) en extrémité de la tige (6) dans le manchon (311) de l'adaptateur (1), on amène en correspondance les orifices passants (8 et 8') ménagés respectivement dans le tube creux (311) et dans le tube plein (9), ce qui permet la mise en place des moyens de liaison et de fixation (314) au support. Ces moyens sont constitués ici d'une barre de blocage transversale, qui se présente sous une forme extrêmement simple. Il s'agit en fait d'une barre pleine qui comporte dans sa partie centrale deux trous perpendiculaires (10 et 10') qui la traversent de part en part et qui sont espacés d'une distance au moins égale à une fois et demi le diamètre du manchon (311).

Lorsque l'on met en place la barre de blocage (314) au travers des orifices passants (8 et 8') des deux tubes (311, 9), on retrouve de part et d'autre de l'axe vertical des deux tubes les orifices passants (10, 10') de la barre (314). Dans l'un des orifices (10), on prévoit une chaînette de fixation (19) ou un autre dispositif équivalent, qui est en place à demeure puisque fixée par une extrémité à la tige par un anneau soudé ou riveté (non représenté). La chaînette (19) étant en place, son autre extrémité reçoit un crochet (non représenté) ouvert pour engager l'orifice (10') de la barre de blocage (314) qui se trouve de l'autre coté. Lorsque le crochet est en place, la barre de blocage (314) ne peut plus se déplacer qu'entre les deux positions d'extrémité qui sont définies par les orifices (10 et 10') recevant les extrémités de la chaînette (19).

Ainsi, la barre de blocage (314) empêche le manchon (311) de se désolidariser du tube (9). De surcroît, elle peut servir de poignée de commande pour faciliter le mouvement de vissage de la tige (6) dans le sol.

La figure 6 illustre une quatrième variante de réalisation de l'invention, selon laquelle l'adaptateur portant la laisse à enrouleur sera relié à un support vertical, comme par exemple une paroi, un mur, ou une porte.

Le manchon de l'adaptateur comporte, comme à la figure 1, un tube creux (411) avec la tige filetée (12) à une de ses extrémités. Le manchon (411) comporte dans sa partie d'extrémité opposée à celle recevant la tige filetée (12) des moyens de liaison et de fixation (414) au support. Ces moyens sont constitués ici d'une plaque sensiblement carrée avec des orifices de fixation (40) pour le passage de vis, par exemple aux quatre coins, à laquelle est soudé le manchon (411),

De préférence, le manchon (411) sera soudé perpendiculairement par rapport à la plaque (414). Les dimensions du tube peuvent varier mais seront définies de manière à laisser subsister un espace suffisant entre le support, c'est à dire la paroi verticale, et la tige filetée (12) d'extrémité recevant le récepteur (2).

Cette modalité permet de maintenir un animal dans une zone délimitée, tout en lui laissant une certaine liberté de mouvement. Cette variante du dispositif selon l'invention est particulièrement adaptée pour les animaux de grande taille, susceptible d'exercer une traction importante sur le dispositif.

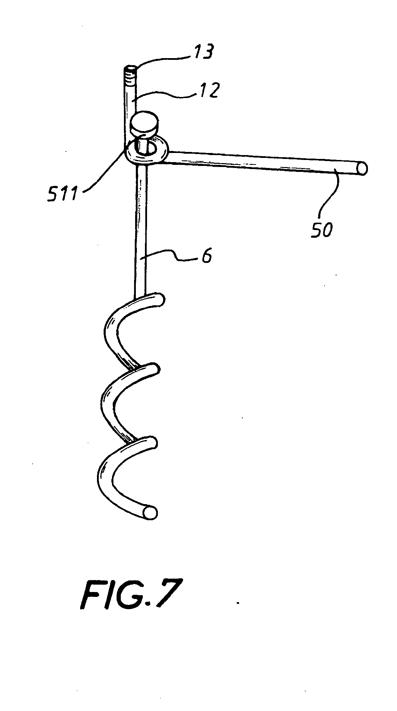

La figure 7, enfin, illustre une extrapolation de l'invention à une variante très simplifiée, dans laquelle le manchon de l'adaptateur est formé dans la tige de support elle-même, sans en être dissocié.

Selon cette variante, l'adaptateur n'est pas dissocié du support et le manchon est formé directement dans la partie supérieure de la tige (6) de support. Comme précédemment, l'extrémité de la tige (6) destinée à être enfoncée dans le sol se termine par une série de spires formant une zone de type « tire bouchon ». A son autre extrémité, la tige (6) est pliée pour former une boucle ou manchon ouvert des deux côtés (511) et se termine par une extension comportant un filetage d'extrémité qui forme la tige filetée (12) destinée à recevoir le récepteur (2). Pour faciliter l'utilisation du dispositif, on prévoit d'introduire dans la boucle (511) une barre de commande (50).

On constate ainsi que le dispositif proposé par l'invention, quelque soit la variante de réalisation, est composé d'un nombre limité de pièces, qui sont peu complexes à réaliser et qui sont par ailleurs très faciles à utiliser, par une personne seule. De surcroît, le dispositif selon l'invention est peu encombrant et démontable et peut parfaitement être emporté par l'utilisateur, par exemple pour une randonnée dans un sac ou avec une bicyclette.

Cependant, rien n'interdit à l'utilisateur, s'il le souhaite, de laisser en place pendant un certain temps la partie du dispositif qui est prévue pour coopérer avec le support.

L'utilisateur dispose de deux niveaux de décrochage / accrochage. Il peut choisir de laisser en place l'ensemble du dispositif et de détacher la poignée de la laisse à enrouleur. Il peut également choisir de laisser en place la poignée de l'enrouleur sur l'adaptateur et de désolidariser l'adaptateur du récepteur.

En fait, une fois les moyens récepteurs en place, l'utilisateur n'a en tout et pour tout qu'une seule opération à effectuer pour utiliser le dispositif. II lui suffira en effet de mettre en place la poignée de la laisse à enrouleur dans la gorge de l'adaptateur, à l'extrémité opposée à la pièce de liaison au moyen récepteur, puis d'assurer son maintien en place en utilisant les moyens de fixation rapides prévus pour ce faire.

L'ensemble de l'opération ne prend que quelques secondes, tout comme le décrochage qui ne constitue que l'opération inverse de celle décrite ci-dessus.

Il est à noter que le dispositif selon l'invention n'est pas dépendant d'un type particulier d'enrouleur de laisse et n'exige pas par ailleurs l'utilisation d'une laisse dédiée qui ne serait pas dissociable ou qui en serait pas utilisable de manière indépendante, comme c'est le cas avec les dispositifs connus de l'art antérieur.

L'adaptateur qui est prévu dans le cadre de la présente invention permet le raccordement et la fixation de tout type de laisse à enrouleur, sans qu'il soit nécessaire de les modifier.

Bien entendu, ceci n'exclut pas l'utilisation de laisses dédiées qui pourront tout aussi bien être compatibles avec le dispositif selon l'invention.

On peut ainsi prévoir sans sortir du cadre de la présente invention d'utiliser un enrouleur de laisse comportant un orifice traversant dans la poignée, cet orifice pouvant être prédéfini ou réalisé ultérieurement en fonction du type d'enrouleur concerné, pour permettre une mise en place directe sur l'axe de la tige filetée telle que décrite ci-dessus.

Enfin, il convient de noter que le dispositif selon l'invention, tout en offrant d'excellentes capacités de résistance à la traction, laisse une large liberté de mouvement à l'animal qui peut se déplacer soit dans le plan horizontal lorsque le récepteur est fixé à une paroi verticale, soit selon un périmètre plus ou moins large et réglable lorsque le récepteur est fixé à un support horizontal, par exemple dans le sol.

Enfin, le dispositif selon l'invention permet à l'utilisateur de régler rapidement et de manière fiable la distance de déplacement qu'il entend laisser à son animal de compagnie et ainsi éviter tout risque tant pour cet animal que pour les personnes présentes dans la zone.

## Revendications

1. Dispositif pour relier la laisse d'un animal domestique à un support fixe, composé
- d'un adaptateur (1) constitué d'un manchon (11) comportant à une de ses extrémités une tige saillante (12) formant un angle compris entre 0° et 90° avec l'axe longitudinal du manchon (11) et à son autre extrémité des moyens de liaison et de fixation (14) au support destiné à recevoir le dispositif, et le manchon (11) n'étant pas dissocié de l'adaptateur (1) et
- d'un récepteur (2) prévu pour recevoir la poignée (3) d'une laisse à enrouleur (4),
**caractérisé en ce que** le récepteur (2) comporte une plaque (21) dont l'une des extrémités se prolonge par un tube ouvert (22) dont le diamètre interne est légèrement supérieur à celui de la tige (12), les dimensions respectives de la tige (12) et du tube (22) étant définies de telle sorte que lorsque le tube (22) est engagé sur la tige (12), l'extrémité libre de ladite tige dépasse du bord supérieur du tube (22), l'autre extrémité de ladite plaque (21) étant repliée pour former une gorge en forme de U définissant un logement (24) pour la poignée (3) d'un enrouleur de laisse.

2. Dispositif selon la revendication 1, **caractérisé en ce que** l'extrémité libre de la tige (12) présente un filetage (13),

3. Dispositif selon la revendication 1 ou la revendication 2, **caractérisé en ce que** le manchon (11) est un tube creux.

4. Dispositif selon la revendication 1 ou la revendication 2, **caractérisé en ce que** le manchon (11) est composé de deux tubes (112 et 113), le premier tube interne (112) comportant dans sa partie centrale un rétrécissement (115) formant une gorge circonférentielle pour recevoir le tube externe (113).

5. Dispositif selon la revendication 1 ou la revendication 2, **caractérisé en ce que** le manchon (11) est une pièce triangulaire (211) creuse, ouverte à la base.

6. Dispositif selon la revendication 1 ou la revendication 2, **caractérisé en ce que** les moyens de liaison et de fixation (14) au support destiné à recevoir le dispositif sont constitués d'une vis papillon (114) en extrémité du manchon (11).

7. Dispositif selon la revendication 1 ou la revendication 2, **caractérisé en ce que** les moyens de liaison et de fixation (14) au support destiné à recevoir le dispositif sont constitués de deux extensions opposées (214) formées dans la partie inférieure du manchon (11), pour autoriser le passage d'une goupille.

8. Dispositif selon la revendication 1 ou la revendication 2, **caractérisé en ce que** les moyens de liaison et de fixation (14) au support destiné à recevoir le dispositif sont constitués d'une barre de blocage (314) transversale

9. Dispositif selon la revendication 1 ou la revendication 2, **caractérisé en ce que** les moyens de liaison et de fixation (14) au support destiné à recevoir le dispositif sont constitués d'une plaque sensiblement carrée (414) avec des orifices de fixation (40) et soudée à l'extrémité du manchon (11) opposée à celle comportant la tige filetée (12).

## Patentansprüche

1. Vorrichtung zum Festmachen der Leine eines Haustiers an einer festen Halterung, bestehend aus
- einem Adapter (1), der aus einer Muffe (11) besteht, die an einem Ende einen vorstehenden Schaft (12) umfasst, der einen Winkel zwischen 0° und 90° zur Längsachse der Muffe (11) bildet, und am anderen Ende Mittel zur Verbindung und Befestigung (14) an der zum Aufnehmen der Vorrichtung dienenden Halterung, wobei die Muffe (11) nicht vom Adapter (1) getrennt ist, und
- einer Aufnahme (2), die für das Aufnehmen des Handgriffs (3) einer Rollleine (4) vorgesehen ist,
**dadurch gekennzeichnet, dass** die Aufnahme (2) eine Platte (21) umfasst, deren eines Ende durch ein offenes Rohr (22) fortgesetzt wird, dessen Innendurchmesser etwas größer als der Durchmesser des Schafts (12) ist, wobei die jeweiligen Abmessungen des Schafts (12) und des Rohrs (22) so definiert sind, dass, wenn das Rohr (22) auf den Schaft (12) geschoben wird, das freie Ende des genannten Schafts über den oberen Rand des Rohrs (22) hinausragt, während das andere Ende der genannten Platte (21) gebogen ist, um eine U-förmige Rille zu bilden, die eine Lagerung (24) für den Handgriff (3) einer Rollleine bildet.

2. Vorrichtung nach Anspruch 1, **dadurch gekennzeichnet, dass** das freie Ende des Schafts (12) mit einem Gewinde (13) versehen ist.

3. Vorrichtung nach Anspruch 1 oder nach Anspruch 2, **dadurch gekennzeichnet, dass** die Muffe (11) ein hohles Rohr ist.

4. Vorrichtung nach Anspruch 1 oder nach Anspruch 2, **dadurch gekennzeichnet, dass** die Muffe (11) aus zwei Rohren (112 und 113) besteht, wobei das erste Innenrohr (112) in seinem mittleren Bereich eine Verengung (115) aufweist, die eine umlaufende Rille bildet, um das Außenrohr (113) aufzunehmen.

5. Vorrichtung nach Anspruch 1 oder nach Anspruch 2, **dadurch gekennzeichnet, dass** die Muffe (11) ein hohles dreieckiges Teil (211) ist, das an der Grundseite geöffnet ist.

6. Vorrichtung nach Anspruch 1 oder nach Anspruch 2, **dadurch gekennzeichnet, dass** die Mittel zur Verbindung und Befestigung (14) an der für die Aufnahme der Vorrichtung bestimmten Halterung aus einer Flügelschraube (114) am Ende der Muffe (11) bestehen.

7. Vorrichtung nach Anspruch 1 oder nach Anspruch 2, **dadurch gekennzeichnet, dass** die Mittel zur Verbindung und Befestigung (14) an der für die Aufnahme der Vorrichtung bestimmten Halterung aus zwei gegenüberstehenden Verlängerungen (214) bestehen, die im unteren Bereich der Muffe (11) gebildet werden, um das Durchführen eines Stifts zu ermöglichen.

8. Vorrichtung nach Anspruch 1 oder nach Anspruch 2, **dadurch gekennzeichnet, dass** die Mittel zur Verbindung und Befestigung (14) an der für die Aufnahme der Vorrichtung bestimmten Halterung aus einer Blockierquerstange (314) bestehen.

9. Vorrichtung nach Anspruch 1 oder nach Anspruch 2, **dadurch gekennzeichnet, dass** die Mittel zur Verbindung und Befestigung (14) an der für die Aufnahme der Vorrichtung bestimmten Halterung aus einer nahezu quadratischen Platte (414) mit Befestigungslöchern (40) bestehen, die am dem Ende mit dem Gewindestift (12) gegenüberliegenden Ende der Muffe (11) angeschweißt ist.

## Claims

1. Device for connecting the leash of a domestic animal to a fixed support, comprised of
- an adapter (1) made up of a sleeve (11) comprising at one of its ends a projecting rod (12) forming an angle lying between 0° and 90° with the longitudinal axis of the sleeve (11) and at its other end means for connecting and fastening (14) to the support designed to receive the device, and the sleeve (11) not being disassociated from the adapter (1) and
- a receiving element (2) provided to receive the handle (3) of a retractable leash (4),
**characterised in that** the receiving element (2) comprises a plate (21) one of the ends of which extends by means of an open tube (22) the internal diameter of which is slightly greater than that of the rod (12), the respective dimensions of the rod (12) and the tube (22) being defined in such a way that when the tube (22) is engaged on the rod (12), the free end of said rod projects beyond the top edge of the tube (22), the other end of said plate (21) being folded back to form a U-shaped groove defining a housing (24) for the handle (3) of a retractable leash.

2. Device according to claim 1, **characterised in that** the free end of the rod (12) presents a thread (13),

3. Device according to claim 1 or claim 2, **characterised in that** the sleeve (11) is a hollow tube.

4. Device according to claim 1 or claim 2, **characterised in that** the sleeve (11) is comprised of two tubes (112 and 113), the first inner tube (112) comprising in its central part a narrowing (115) forming a circumferential groove to receive the outer tube (113).

5. Device according to claim 1 or claim 2, **characterised in that** the sleeve (11) is a triangular hollow part (211) which is open at the base.

6. Device according to claim 1 or claim 2, **characterised in that** the means for connecting and fastening (14) to the support designed to receive the device are made up of a wing screw (114) at the end of the sleeve (11).

7. Device according to claim 1 or claim 2, **characterised in that** the means for connecting and fastening (14) to the support designed to receive the device are made up of two opposing extensions (214) formed in the lower part of the sleeve (11), to allow the passage of a pin.

8. Device according to claim 1 or claim 2, **characterised in that** the means for connecting and fastening (14) to the support designed to receive the device are made up of a transversal blocking bar (314).

9. Device according to claim 1 or claim 2, **characterised in that** the means for connecting and fastening (14) to the support designed to receive the device are made up of a significantly square plate (414) with fastening holes (40) and welded to the end of the sleeve (11) opposite the one comprising the threaded rod (12).
